# EUROPEAN PATENT SPECIFICATION

(11) **EP 0 391 720 B1**
(45) Date of publication and mention of the grant of the patent: **21.06.1995**
(21) Application number: 90303677.0
(22) Date of filing: 05.04.1990
(51) Int. Cl.: H01M 6/10, H01M 2/26

(54) **Electrode assembly**
Elektrodenanordnung
Assemblage d'électrodes

(30) Priority: 05.04.1989 US 333602
(43) Date of publication of application: 10.10.1990
(73) Proprietor: EVEREADY BATTERY COMPANY, INC., St. Louis Missouri 63164 (US)
(72) Inventor: Roels, Timothy J., Rocky River, Ohio 44116 (US); Affeldt, Jeannine L., Avon Lake, Ohio 44012 (US)
(74) Representative: Lord, Hilton David

(56) References cited:
- FR-A- 1 415 519
- US-A- 4 029 856
- PATENT ABSTRACTS OF JAPAN, vol. 12, no. 320 (E-651)[3167], 30th August 1988

## Description

The present invention relates to galvanic cells having rolled or coiled ('jelly roll') electrode assemblies.

Such cells normally have at least one electrode of a layer of electrochemically active material supported on a condutive carrier layer, normally metal, to form such an electrode, for example, the cathode. Some manufacturers employ carriers such as expanded metal or sheet metal, but we prefer to employ a thin delicate metallic foil as the carrier so that, among other things, the carrier occupies far less space in the cell, allowing a correspondingly greater quantity of active electrode material. A grid carrier can be used, but such a carrier is thicker, heavier and more expensive than a thin metal foil carrier and, so, less volumetrically efficient in the cell. Moreover, it is desirable to have the foil project axially further than the separator in the cell so to expose a helix of foil, and a contact member engaging the projecting foil to make electrical contact and serve as the terminal. The use of foil, however, especially in this projecting fashion, presents very real difficulties during assembly.

Battery assembly employing jelly roll electrodes is complicated by the protruding, straight contact edges where the bare foil is exposed at the end of the roll. An insulator ring may be employed at the top of the cell to further ensure electrical isolation of the exposed edges of the carrier from the cell container, which serves as the anode terminal. Any contact of the foil with the container will short the cell. Extreme difficulty has been encountered in attempting to insert the insulator ring after the rolled electrode assembly has been placed in the cell container. Therefore, this ring would normally have to be placed on the wound electrode assembly prior to its placement into the container. However, this presents its own problems. For example, the thin carrier edges tend to buckle under pressure in an unpredictable manner, or a portion of the foil can crumple, leading to contact with the container and a shorted cell. This limits allowable contact pressure of a contact spring or other contact member. Cell interior space is ideally or factually limited so that space for an insulator ring and other additional cell parts must be kept to a minimum. Therefore, forcing all of the elements together, as is necessary, increases the potential for shorting.

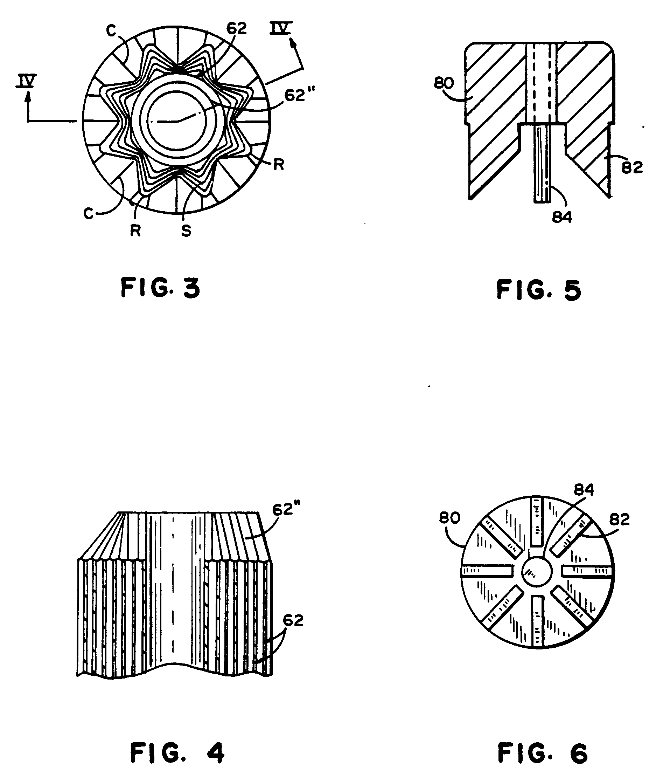

Previous methods of making electrical contact with exposed edges of electrode carriers in a rolled cell assembly have included the use of special slotted cross members to grip the carrier edges, for example, as disclosed in U.S. Patent 3,732,124. Alternatively, the edges of a sheet metal electrode carrier have been slit and each section folded over to partially overlap the adjacent folded section as in U.S. Patent 3,761,314 (especially Figure 3). The first technique requires exact fitting of the slotted member prior to cell sealing, a tedious and time-consuming operation. The second technique requires careful multiple slitting of the carrier edge, with the same disadvantage. Further, these folded over portions can block substantial areas of liquid access to the cell interior during electrolyte filling, thus increasing the time required to assure complete filling, and even blocking some electrode portions from contact with the electrolyte.

An apparatus similar to that now claimed is described in French patent application no. 1,415,519. This apparatus includes a wound assembly in which the outer three layers are deformed by clamping, resulting in indentations.

The only foil-backed non-aqueous solid cathode cell known to be commercially sold has been a Li/MoS₂ cell, which employs an electrode tab welded to the pin of a glass-to-metal seal, the pin thereby serving as the terminal for that electrode. The foil edges of this cell are not exposed but are covered by a wider separator strip. This is a different type of construction.

Another manufacturer employs an expanded metal carrier, with a pressure contact to one electrode in an Li/MnO₂ cell, using an electrode tab on the other electrode rather than contact to exposed carrier edges. Still another manufacturer employs pressure contact to exposed electrode carrier edges at the top of an Li/MnO₂ cell, by using an expanded metal grid carrier which can be radially crimped toward the centre without crumpling the carrier or causing shorting thereby. This cell has a plastic insulator cone at the top.

The present invention overcomes the above problems and limitations.

An electrode assembly for a galvanic cell, comprising anode and cathode layers insulated from each other and rolled together, one electrode comprising active electrode material in association with electrically conductive foil, the foil being adapted to protrude from one end of the assembly in a helical manner, characterised in that at least the outer turns of exposed foil are radially indented, preferably in a regular fashion, sufficiently and at enough locations to substantially prevent the possibility of contact between the foil and the container of a suitable galvanic cell; and in that the foil edges are pressed onto each other, and the assembly includes a metallic spring contact engaging the foil edges.

In a preferred embodiment, the protruding exposed edges of the delicate foil carrier of an electrode in a jelly roll cell are specially indented inwardly at spaced intervals to form sloped valleys and intermediate sloped ridges to prevent shorting and facilitate placement of an insulator ring, when used, at the top of the cell, after the electrode has been inserted in the container. It has been determined that effective insulation of the exposed foil carrier edges from the container wall, and good continuity of contact with the pressure contact means, such as a spring contact member, without shorting or damage to the thin foil edges, can be achieved by radially indenting toward the axial center the axial ends of the foil edges at spaced intervals on at least a significant number of the outer turns of the foil coil. This can be readily accomplished by automatic machinery, in contrast to the meticulous cut-and-fold technique, for example, of U.S. Patent 3,761,314. The inward indentations are preferably at regular intervals, for example, in a "star" pattern, the diameter of the exposed foil carrier edges from the jelly roll being sufficiently reduced to ensure that there is no contact with the container wall, and also to allow convenient insertion of an additional plastic cone insulator. The inward folding of the foil edges also lends greater mechanical strength to these delicate edges, so preventing them from being crushed under pressure from the contact member. Carrier edge contact is thus concentrated, and the resulting structure can withstand very high contact force. Lower internal cell resistance is also promoted by the improved contact of the carrier edges in these concentrated edge zones. This special inwardly indented edge design allows for placement of the insulator ring after the jelly roll is already in the cell container, thus greatly facilitating cell assembly. Because indenting is done at intervals, openings between the foil edges in the spaces between the indentations facilitate entry of fluid electrolyte passage into all portions of the cell during filling.

The present invention also provides a method for assembling a jelly roll type electrode galvanic cell comprising rolling anode, cathode and insulating layers together, one electrode comprising active electrode material in association with electrically conductive foil, such that the foil protrudes from one end of the assembly in a helical manner, and inserting the so-formed jelly roll, exposed foil last, into a suitable container for a galvanic cell,characterised in that at least the outer turns of exposed foil are radially indented, either before or after insertion and preferably in a regular fashion, sufficiently and at enough locations to substantially prevent the possibility of contact between the foil and the container, filling with electrolyte and completing the cell using the exposed foil as contact for one terminal.

Any cell employing a jelly roll electrode assembly can employ the present invention. The fact that now it is easy to use thin foil is particularly advantageous, as this greatly enhances the potential capacity of the cell. The invention does not require any special materials and all that is necessary is that the exposed foil is indented as described. The foil is then both prevented from contacting the cell container and is greatly strengthened so that such as an insulating ring can be placed thereon, before or after insertion into the container, without buckling, and rendering useless, the foil.

The jelly roll comprises foil sticking out of one end. Apart from this, the roll may be made in any conventional manner as required. Usually, the foil will be associated with one or two layers of active electrode material, and the whole is sandwiched between an insulator and another electrode which is conveniently a metallic anode. Ideally, the insulator extends beyond the second electrode to ensure electrical separation.

By using indentations, rather than just a general crushing, gaps are left in the ridges between indents so that electrolyte can permeate therebetween on loading the cell.

The present invention will now be illustrated in greater detail with reference to the accompanying drawings, in which:
Fig. 1 is a sectional elevational view of one version of a cell according to the invention;
Fig. 2 is an enlarged fragmentary sectional elevational view of the upper portion of the cell of Fig. 1;
Fig. 3 is a plan view of the central components of the cell in Fig. 2, taken on plane III-III;
Fig. 4 is a fragmentary sectional view taken on the section cut lines IV-IV of Fig. 3;
Fig. 5 is a sectional elevational view of one type of forming tool for use in accordance with the invention;
Fig. 6 is an enlarged view of the underside of the device of Fig. 5; and
Fig. 7 is a greatly enlarged, exploded, sectional elevational view of a portion of the jelly roll electrode assembly.

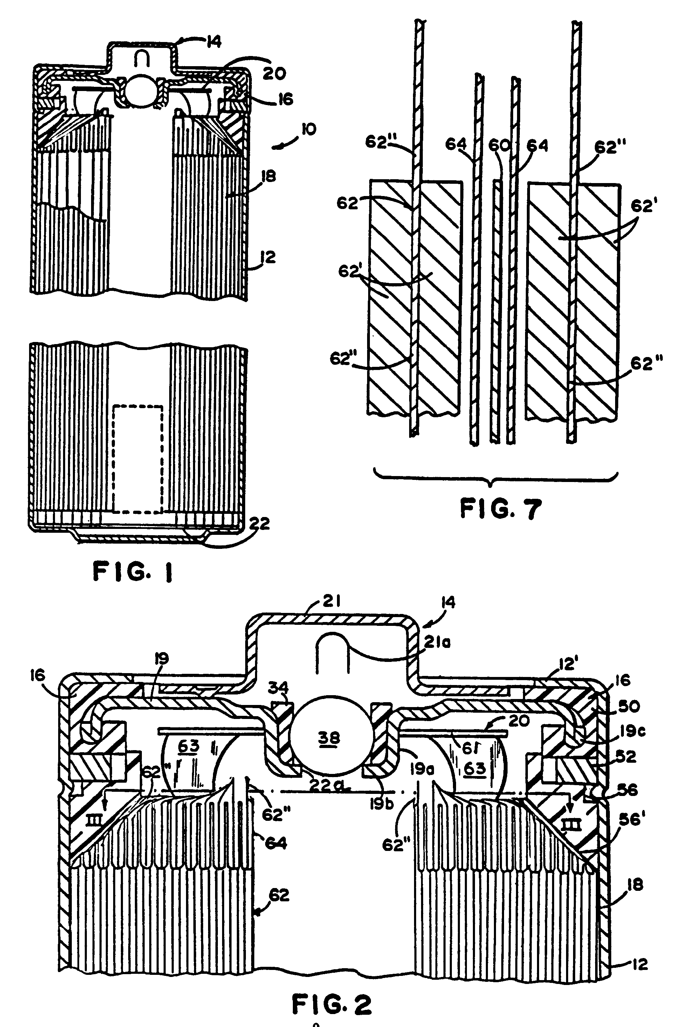

Figure 1 shows an electrochemical or galvanic cell 10 which includes an outer cylindrical container 12 having a cover subassembly 14 cooperatively engaged with a spring contact 20, a seal subassembly 16 within the cell, and a jelly roll electrode and separator assembly 18, including an anode, a cathode formed of an active layer on a thin metallic carrier foil, and a pair of separator sheets, all rolled into the jelly roll configuration. The cell includes a conventional bottom separator disc 22 between the bottom of the container and the roll, and an electrolyte fluid filling the space in the container and absorbed in the separator and the cathode material.

The cell is a nonaqueous electrochemical cell or galvanic cell utilising known materials for generation of the electrochemical reaction. The cell housing is a cylindrical container or can 12 having an open upper end ultimately closed by cell cover subassembly 14. The other, lower end and the peripheral wall of the container are an integral structure formed in typical fashion well-known in the art. The can and cover may be made from materials such as nickel and nickel alloys, steel, nickel-plated steel, tin-plated steel, stainless steel and other suitable conductive metals and metal alloys.

Cover subassembly 14 can be variously configured and is shown as having a cover 19 and a cap 21 in Fig. 2. Cap 21 is shown to have a vent slot 21a communicating with the ambient atmosphere. The cover has a generally planar main body section with a generally cylindrical, depressed central vent well 19a which extends downwardly into the cell. The bottom of the well has a peripheral flange 19b at the bottom centre thereof, defining a central opening 22a. Contained within the well 19a is a resilient cylindrical vent liner 34 having a central cylindrical passage therein adapted to receive, by force fit, a spherical seal member 38. In conventional manner, this vent arrangement is adapted to allow unexpected gaseous pressure to discharge. The vent liner 34 is preferably press-fitted into the sealing well to abut the planar support ledge 19b, and may be formed from a moulded polymeric resilient material such as Tefzel (Trademark of E.I. DuPont & Company) or other materials such as polyethylene, polypropylene and polytetrafluoroethylene. The seal member 38 can be of a resilient or nonresilient material such as metal, glass, ceramic or polymeric materials, with at least the exterior thereof coated, if necessary, with a material chemically resistant to the components of the cell. Typical useful coating materials include polytetrafluoroethylene and fluorinated ethylene-propylene copolymer. The seal member is press- or force-fitted into the vent liner, and other vent means than that shown can also be employed.

The outer peripheral edge of the cover includes a rolled back edge 19c formed axially inwardly of the cell and then folded back upon itself to cooperate with a seal member, or gasket, 50 of the seal subassembly. Cap 21 may be attached to cover 19 by welding, to cover the central portion of the cover.

The rolled back peripheral edge 19c of the cover tightly engages annular gasket 50 resting on support ring 52 (suitably of metal) adjacent insulating cone ring 56. Cone ring 56 comprises an annular member of electrically insulating material having a frustoconical inner surface 56′ tapered axially inwardly toward the open end of the cell. Retained around the outer periphery of the sealing well is an electrically conductive spring member 20 having an annular body 61, the downwardly protruding resilient legs 63 of which are biased against the exposed carrier foil edges of the jelly roll as described hereinafter.

The outer peripheral edge of container 12 is ultimately rolled over the top of gasket 50 at 12′ to retain the gasket and cover assembly intact, causing the insulator cone to be pressed tightly against the outer peripheral portion of the jelly roll upper end, and causing spring contact 20 to tightly engage the exposed metallic carrier foil edges and sealing the cell. The gasket may be of any conventional material, such as a resilient polymer.

The anode and cathode may be formed of any of various suitable materials. A preferred anode is flexible lithium foil capable of being rolled into the jelly roll configuration. Its thickness is typically four to ten mils (0.1 to 0.254mm), preferably six mils (0.15mm). Alternative anode materials may be employed if desired. The anode is of a consumable metal such as an alkaline or alkaline earth metal, an alloy thereof or an intermetallic compound such as lithium monoaluminide, or a solid solution such as lithium-magnesium. Sodium, potassium and lithium are preferred, with lithium being most preferred.

The cathode for the construction is suitably a solid cathode system formed of a layer of electrochemically active substances such as iron sulphide, for example, FeS₂, mixed with a conductive carbon or graphite and a binder, the mixture being sprayed or spread upon at least one surface (and preferably upon both surfaces) or a thin foil of a metal such as aluminium, stainless steel, nickel or titanium. This active material is conventional technology in the art. Suitable active cathode materials include transition metal oxides and sulphides, and polycarbon fluorides. Examples include FeS, MnO₂, (CFₓ)ₙ, (C₂F)ₙ, V₂O₅, WO₃, MoO₃, MoS₂, lead oxides, cobalt oxides, copper oxides, copper sulphides, NiS and TiS₂. FeS₂ and MnO₂ are preferred, and FeS₂ is most preferred. In an FeS₂ or/and MnO₂ cell, the carrier foil is typically aluminium. Alternatively, if a polycarbon fluoride active material is used, the carrier foil is preferably stainless steel or titanium to prevent corrosion, as is known. For aluminium and stainless steel carriers, non-annealed, that is, full hard, material are preferred. Binders typically used include polymers such as ethylene-propylene copolymer or polytetrafluoroethylene.

The delicate carrier foil has a thickness in the range of 0. 5 mil to 3 mils, that is, 0. 0005 - 0. 003 inch (0. 013 to 0. 076mm). It is preferably 1 mil (0. 001 inch, 0. 0254mm) if the foil is non-perforated. If desired, the foil may have perforations where the foil contacts the active cathode material. Slightly greater thickness, for example, 2-3 mils (0. 05 to 0. 076mm), is considered desirable for such perforated foil. These are readily crushable. Such thin materials enable a great deal of active material to be employed, adding to the cell capacity, but they will readily deform so that assembly of the cell has previously been impractical where contact to exposed carrier edges is to be made. The active cathode material layer is usually about 5-15 mils thick, that is, 0. 005 to 0. 015 inch (0.13 to 0.38mm) thickness, preferably about 7 mils (0.007 inch, 0.18mm). A thickness greater than this can result in difficulty in forming the structure into a jelly roll and excessive flaking off of the cathode material.

A pair of separator sheets is provided. These are of conventional non-conductive material to prevent shorting between the surfaces of the anode and cathode, and can be in the range of 0. 5-2. 5 mils (0. 013-0.064mm), preferably 1. 3 mils (0.033mm), in thickness. Typical of these materials are non-woven polyamide fibres, polypropylene fibres, microporus polypropylene, microporous polyethylene and fibrous-reinforced regenerated cellulose.

The metallic carrier foil 62˝ for the cathode is purposely of a width dimension to cause it to extend beyond one lateral edge of the cathode active material 62′ and beyond the anode 60. Separator sheets 64 also extend beyond the active material of the cathode and beyond the anode, but not as far as foil 62˝. When the materials are subsequently formed into a jelly roll configuration, the delicate metallic foil will thus protrude or extend in a helical pattern, when viewed axially, toward the open end of the cell, and beyond the other components.

The three types of component, anode foil 60, cathode 62 with its at least one layer 62′ of active material on the metallic foil carrier 62˝, and separator sheets 64, are then rolled into a jelly roll configuration. In Fig. 7, just two turns of the cathode and one turn of the anode are depicted in exploded form. The jelly roll assembly is fabricated in conventional fashion by combining the anode, cathode and separator materials and rolling the layers tightly together into the cylindrical configuration of a roll small enough to be slid into the open container prior to attachment of the cover and other components as described. Prior to inserting the roll, a suitable separator disc 22 of electrically nonconductive material, such as described above for the separators, is placed in the bottom of the can.

After the components have been formed into a jelly roll, the roll may be inserted into the open upper end of the container 12 until it rests upon the bottom disc separator 22. When so placed, electrical contact between the outermost turn of the anode and the inner wall of the container is made in conventional fashion, such as by a conductive tab secured to the anode, extending from the end of the jelly roll and pressed against the can wall. The axial end having the exposed carrier foil is placed in the container last to be toward the open end of the can.

The special indentation step for the foil may be performed before or after the jelly roll is placed in the container. The former is presently preferred, at least for some applications.

More specifically, a multi-folded indentation pattern is formed into the protruding metallic foil, such as the eight-pointed star pattern depicted in Fig. 3, by indenting the exposed foil edges, at least those of the several outer turns of foil, radially inwardly at circumferential intervals. This may be done using various devices and techniques, preferably by a forming device such as that depicted in Figs. 5 and 6, comprising a generally cylindrical forming device 80, having a plurality of generally planar, radially and axially oriented, circumferentially extending, arranged and spaced, forming blade elements 82. When the inward indentations are to be formed after the rolled electrode assembly is in the container, device 80 should have a diameter slightly smaller than the inside diameter of the container open end. Elements 82 have the inner axial end tapered with the longest dimension at the radially outer edge. The inner axial ends of these forming elements taper inwardly in a frustonconical fashion, the lower portions being the widest part of the frustum, and tapering upwardly toward each other so that the outer peripheral portions of the carrier foil edge will be engaged first and forced radially inward. These elements extend from a generally cylindrical base. Further, there is preferably a gap between the central edges of the forming elements. In this gap is shown a central, axially extending alignment pin 84. By axially pressing the forming device against the exposed, axially protruding, and helically arranged edges of the metallic foil carrier, the tapered axial ends of the spaced forming elements will force at least a significant number of the spaced foil turns radially inwardly on each other, beginning with the outermost turn of foil, in such a fashion as to form a folded pattern which may either be regular, for example star-like, or irregular. This radially inward indentation at spaced circumferential intervals causes deep crevasses C (Fig. 3) or valleys at said intervals and lesser sloped ridges R between the intervals. The trailing end of the foil carrier is folded into one of the crevasses also, so that it cannot contact the container wall. At these ridges, the openings or spaces S remain between the turns of the foil edges so that fluid electrolyte can readily fill the cell when poured into it.

This special deforming action prevents electrical contact between the foil edges and container 12, to prevent shorting and spoilage of the cell. It also adds strength to the foil so that the electrical contact spring can be pressed tightly against the foil. Yet is can be performed quickly, reliably and automatically, before or after the rolled electrode assembly is in the container, so that assembly of the cells can be accelerated.

Subsequent to this forming operation, the remaining components of the cell can be dependably installed. That is, the electrolyte fluid is poured in to fill the cell, insulating cone 56 having a frustoconically shaped inner surface is placed against the outer peripheral portions of turns of the foil, ring 52 is inserted, gasket 50 is inserted, cover assembly 14 is placed in engagement with gasket 50 at the rolled outer edge of the cover, while causing the connected contact spring 20, and specifically its legs 63, to tightly engage the exposed, folded over metallic carrier foil, and finally the outer peripheral end of can 12 is rolled over to form a planar annular flange 12′, pressing the flange of gasket 50 against the cover, to seal and secure the total assembly. The electrolyte fills the central space and the spaces between the layers, also normally causing the separator material to swell somewhat, applying additional outward pressure on the roll to ensure good contact of the anode tab to the cell wall.

The electrolyte is prferably based on a nonaqueous organic solvent made conductive by the presence of a dissolved salt. Typical organic solvents include propylene carbonate, ethylene carbonate, γ-butyrolactone, 1, 1- and 1, 2-dimethoxyethane, 1, 3-dioxolane and 3-methyl-2-oxazolidone and, preferably, mixtures of two or more of these solvents.

Suitable salts include LiBF₄ (lithium tetrafluoroborate), LiPF₆ (lithium hexafluorophosphate), LiAsF₆ (lithium hexafluoroarsenate), LiClO₄ (lithium perchlorate) and LiCF₃SO₃ (lithium trifluoromethane sulphonate) and mixtures of these salts.

## Claims

1. An electrode assembly for a galvanic cell, comprising anode and cathode layers insulated from each other and rolled together, one electrode comprising active electrode material in association with electrically conductive foil, the foil being adapted to protrude from one end of the assembly in a helical manner, wherein at least the outer turns of exposed foil are radially indented, preferably in a regular fashion, sufficiently and at enough locations to substantially prevent the possibility of contact between the foil and the container of a suitable galvanic cell; characterised in that the foil edges are pressed onto each other, the assembly includes a metallic spring contact engaging the foil edges, and in that an annular member of electrically insulating material is in contact with the container and engages the ridges defined by the indents.

2. An assembly according to Claim 1, wherein the indentations cause the exposed foil to slope radially inwards with axial distance from the assembly, including those portions of foil between indents.

3. An assembly according to claim 1 or 2, wherein the insulation between electrodes comprises at least one separator sheet having edges which extend beyond the active material in association with the foil, and also beyond the second electrode.

4. An assembly according to any preceding claim, wherein the foil has a thickness between 0.5 mil and 3 mils (0.013 to 0.076mm), preferably 1 mil (0.0254mm).

5. An assembly according to any preceding claim, wherein the foil is nonperforated.

6. An assembly according to any preceding claim, wherein the foil, where it is in engagement with the active material, is perforated.

7. An assembly according to any preceding claim, wherein the foil is non-annealed metal.

8. A galvanic cell comprising the assembly of any preceding claim.

9. An assembly according to claim 8, wherein the annular member is an insulator ring in contact with the container and engaging the ridges defined by the indents.

10. A method for assembling a jelly roll type electrode galvanic cell according to claim 8 or 9 comprising rolling anode, cathode and insulating layers together, one electrode comprising active electrode material in association with electrically conductive foil, such that the foil protrudes from one end of the assembly in a helical manner, and inserting the so-formed jelly roll, exposed foil last, into a suitable container for a galvanic cell, wherein at least the outer turns of exposed foil are radially indented, either before or after insertion and preferably in a regular fashion, sufficiently and at enough locations to substantially prevent the possibility of contact between the foil and the container, and wherein an annular insulating member is placed on the foil, before or after insertion into the container, filling with electrolyte, inserting a metallic spring member to engage the foil and completing the cell using the exposed foil as contact for one terminal.

## Patentansprüche

1. Elektrodenanordnung für eine galvanische Zelle, die Anoden- und Kathodenschichten aufweist, die voneinander Isoliert und zusammen gerollt sind, wobei eine Elektrode aktives Elektrodenmaterial in Verbindung mit einer elektrisch leitenden Folie aufweist, wobei die Folie von einem Ende der Anordnung spiralförmig vorstehen kann, bei welcher zumindest die äußeren Windungen der exponierten Folie radial, vorzugsweise in regelmäßiger Weise, im ausreichenden Maße und an genügend Stellen eingekerbt sind, um die Möglichkeit des Kontaktes zwischen der Folie und dem Behälter einer geeigneten galvanischen Zelle im wesentlichen zu verhindern: dadurch gekennzeichnet, daß die Kanten der Folie aufeinander gedrückt werden, daß die Anordnung einen metallischen Federkontakt einschließt, der in die Folienkanten eingreift, und daß ein ringförmiges Glied aus einem elektrisch isolierenden Material mit dem Behälter in Kontakt und mit den Stegen in Eingriff ist, die von den Kerben gebildet werden.

2. Anordnung nach Anspruch 1, bei welcher die Einkerbungen bewirken, daß die exponierte Folie mit dem Axialabstand von der Anordnung radial nach innen gleitet, einschließlich der Teile der Folie zwischen den Kerben.

3. Anordnung nach Anspruch 1 oder 2, bei welcher die Isolierung zwischen den Elektroden wenigstens eine dünne Trennlage aufweist, die Kanten hat, welche in Verbindung mit der Folie über das aktive Material und auch über die zweite Elektrode hinaus reichen.

4. Anordnung nach einem der vorhergehenden Ansprüche, bei welcher die Folie eine Stärke zwischen 0.5 und 3 Millizoll (0.013 bis 0,076 mm), vorzugsweise von 1 Millizoll (0,0254 mm), hat.

5. Anordnung nach einem der vorhergehenden Ansprüche, bei welcher die Folie unperforiert ist.

6. Anordnung nach einem der vorhergehenden Ansprüche, bei welcher die Folie da, wo sie mit dem aktiven Material in Eingriff ist, perforiert ist.

7. Anordnung nach einem der vorhergehenden Ansprüche, bei welcher die Folie aus ungeglühtem Metall ist.

8. Galvanische Zelle, welche eine Anordnung nach einem der vorhergehenden Ansprüche aufweist.

9. Vorrichtung nach Anspruch 8, bei welcher das ringförmige Glied ein Isolatorring ist, der mit den Behälter in Kontakt und mit den durch die Kerben gebildeten Stege im Eingriff ist.

10. Verfahren zur Montage einer galvanischen Zelle des Rollenelektrodentyps ("jelly roll") nach Anspruch 8 oder 9, welches folgende Schritte aufweist: das gemeinsame Rollen von Anode, Kathode und Isolierlagen, wobei eine Elektrode aktives Elektrodenmaterial in Verbindung mit einer elektrisch leitenden Folie aufweist, in einer Weise, durch die die Folie von einem Ende der Anordnung spiralförmig vorsteht, und das Einsetzen der so gebildeten Rolle, mit der exponierten Folie zuletzt, in einen geeigneten Behälter für eine galvanische Zelle, wobei zumindest die äußeren Windungen der exponierten Folie, entweder vor oder nach dem Einsetzen, radial und Vorzugsweise in regelmäßiger Weise ausreichend und an genügend Stellen eingekerbt werden, um im wesentlichen die Möglichkeit des Kontaktes zwischen der Folie und dem Behälter zu verhindern, und wobei, vor oder nach dem Einsetzen in den Behälter, ein ringförmiges Isolierglied auf die Folie gebracht wird, das Einfüllen des Elektrolyten, das Einsetzen eines metallischen Federelementes, das in die Folie eingreift, und die Fertigstellung der Zelle unter Verwendung der exponierten Folie als Kontakt für eine Klemme.

## Revendications

1. Assemblage d'électrode pour une pile galvanique, comprenant des couches d'anode et de cathode isolées l'une de l'autre et enroulées ensemble, une électrode comprenant un matériau actif d'électrode en association avec une feuille électroconductrice, la feuille étant destinée à déborder d'une extrémité de l'assemblage de façon hélicoïdale, au moins les spires extérieures de la feuille exposée étant entaillées radialement, de préférence de façon régulière, suffisante et au niveau d'un nombre suffisant d'emplacements pour empêcher pratiquement le risque d'un contact entre la feuille et le récipient d'une pile galvanique appropriée; caractérisé en ce que les bords de la feuille sont pressés les uns sur les autres, en ce que l'assemblage englobe un contact à ressort métallique s'engageant dans les bords des feuilles et en ce qu'un élément annulaire de matériau à isolation électrique est en contact avec le récipient et s'engage dans les sillons définis par les entailles.

2. Assemblage selon la revendication 1, dans lequel les entailles entraînent la feuille exposée à s'incliner radialement vers l'intérieur à une distance axiale de l'assemblage, englobant les parties de la feuille situées entre les entailles.

3. Assemblage selon les revendications 1 ou 2, dans lequel l'isolation entre les électrodes comprend au moins une feuille de séparateur possédant des bords s'étendant au-delà du matériau actif, en association avec la feuille, ainsi qu'au-delà de la deuxième électrode.

4. Assemblage selon l'une quelconque des revendications précédentes, dans lequel la feuille a une épaisseur comprise entre 0.5 millième de pouce et 3 millièmes de pouce (0.013 à 0.076 mm), de préférence de 1 millième de pouce (0.0254 mm).

5. Assemblage selon l'une quelconque des revendications précédentes, dans lequel la feuille n'est pas perforée.

6. Assemblage selon l'une quelconque des revendications précédentes, dans lequel la feuille est perforée au niveau des points où elle s'engage dans le matériau actif.

7. Assemblage selon l'une quelconque des revendications précédentes, dans lequel la feuille est du métal non recuit.

8. Pile galvanique comprenant l'assemblage selon l'une quelconque des revendications précédentes.

9. Assemblage selon la revendication 8, dans lequel l'élément annulaire est une bague isolante en contact avec le récipient et s'engageant dans les sillons définis par les entailles.

10. Procédé d'assemblage d'une pile galvanique à électrode du type à bobine "jelly roll" selon les revendications 8 ou 9, comprenant l'enroulement d'une anode, d'une cathode et de couches isolantes, une électrode comprenant du matériau actif d'électrode en association avec une feuille électroconductrice, de sorte que la feuille déborde d'une extrémité de l'assemblage de façon hélicoïdale, l'insertion de la bobine "jelly roll" ainsi formée, la feuille exposée étant inséré en dernier lieu, dans un récipient approprié pour une pile galvanique, dans lequel au moins les spires extérieures de la feuille exposée sont entaillées radialement, ou bien avant ou bien après l'insertion, de préférence de façon régulière, suffisante et au niveau d'un nombre d'emplacements suffisant pour empêcher pratiquement le risque d'un contact entre la feuille et le récipient, et dans lequel un élément isolant annulaire est placé sur la feuille, avant ou après l'insertion dans le récipient, le remplissage avec l'électrolyte, l'insertion d'un élément de ressort métallique destiné à s'engager dans la feuille et l'achèvement de la pile en utilisant la feuille exposée comme contact pour une borne.
